# EUROPEAN PATENT APPLICATION

(11) **EP 3 282 695 A1**
(43) Date of publication of application: **14.02.2018**
(21) Application number: 17185856.6
(22) Date of filing: 11.08.2017
(51) Int. Cl.: H04N 7/18

(54) **VIDEO SURVEILLANCE SYSTEM**

(30) Priority: 11.08.2016 SE 1651103
(71) Applicant: Senecta Security AB, 114 42 Stockholm (SE)
(72) Inventor: JOHANSSON, Daniel, 114 42 Stockholm (SE)
(74) Representative: Brann AB

(57) **Abstract**

The present disclosure relates to a video surveillance system (10), comprising an outdoor surveillance camera unit (12) for capturing and at least video signals and having a first communication interface (14) for communication with a remote coded access service device (20) for securely storing surveillance information related to said video signals and having a coded access, wherein the surveillance information provided via the first communication interface (14) is encrypted in the outdoor surveillance camera unit (12) and in that an external tamper-proof power supply unit (15) is arranged to supply power and provide back-up power supply to the outdoor surveillance camera unit (12), wherein the video surveillance system (10) further comprises a code for providing coded access to said remote (20), and means for down loading said video signals from said coded access recording device (20).

## Description

### TECHNICAL FIELD

The embodiments described herein relate to a video surveillance system according to the introductory part of claim 1.

### BACKGROUND

Video surveillance systems are known to include video surveillance cameras and often surveillance monitors are connected to the surveillance cameras via network.

The term "video surveillance system" normally means a system being able to survey and control a surveillance area indoors or outdoors by means of video cameras.

A simple video surveillance system can comprise only one video camera, but often a plurality of video cameras are provided. Typically, the video cameras together can provide a plurality of images covering the same surveillance area, often transmitted simultaneously to an operator for "manual" checking. But, manual checking is often combined with recording to be able to check time stamped events that have occurred.

Today, there are also video surveillance systems, typically being more cost-effective, in which a centrally located video surveillance central covering multiple surveillance areas, often for different customers, have operators checking a set of monitors for different customers more or less simultaneously.

Present video surveillance systems, however, as described above, suffer from lack of personal integrity. This is particularly the case outdoors, where also law applicable in most jurisdictions hinders legally correct video surveillance outdoors, at least with video recording, which of course is a significant drawback. In reality, a requirement for permission for legally correct video surveillance outdoors of an area is normally that the area is recognized as a criminal area.

Also in countries being liberal to video surveillance outdoors, for instance England, there are considerable problems with the handling of recorded material, which is often a drawback when for instance the Police requires access to relevant material recorded, for instance during a police investigation.

Thus, there are a number of drawbacks with prior art video surveillance systems, in particular as regards obtaining a permission to legally set up a video surveillance system having one or more outdoor video cameras. One reason, for instance in a jurisdiction as in Sweden, for not being granted a permission for such a system, is that it is considered that recorded video material can be used freely of the owner of the video surveillance system.One of the primary drawbacks of prior art video surveillance systems is that they are capable of being tampered with or even destroyed and therefore cannot be relied upon as credible evidence, especially in a court of law.

Another problem is that even if permission would be granted for an outdoor video surveillance camera, a physical visit by the police or other responsible personnel, to the camera itself is often required to be able to get access to the recorded video material, for instance in case of an incident.

Moreover, present infrastructure available for video surveillance systems also suffers from problems with power supply and back-up power adapted to power outdoor cameras.

Hence, there is a need to overcome at least some of the drawbacks mentioned above.

### SUMMARY

According to one aspect of the present disclosure, it would be advantageous to have a video surveillance system with limited access to stored video recording of an outdoor incident and accurate time synchronization, which could be reviewed after the incident or in real-time by the authorities on the scene and later by investigators, prosecutors and/or judges to witness firsthand the incident as it actually happened.

Additionally, according to another aspect of the present disclosure, it would be advantageous to have a video surveillance system that could instantaneously broadcast live activity to authorities for instance in order that a response to the crime could be dispatched to the scene in order to determine and/or prevent the crime.

One of the primary requisites of a secure video surveillance system is a coded access system providing limited access only to authorized persons, and encoding of the recorded video and possibly audio information itself in all parts of the system. This is necessary if the recorded information is stored onboard an outdoor camera or transmitted to a secure storage for retention by authorized persons.

Another failure of prior art systems is lack of external synchronization so that the exact time is accurately embedded into the secure coded information.

The above stated aspects and objects are achieved by means of a video surveillance system according to the independent claim.

According to one aspect, information related to captured video and/or audio is encrypted internally within an outdoor video camera unit and then transmitted to a secure service device.

A first embodiment provides a video surveillance system, comprising a surveillance camera unit for capturing and at least video signals and having a first communication interface for communication with a remote coded access service device for securely storing surveillance information related to the video signals and having a coded access. The surveillance information provided via the first communication interface is encrypted in the surveillance camera unit, which typically comprises an outdoor video camera. An external tamper-proof power supply unit is arranged to supply power and provide back-up power supply to the surveillance camera unit. The video surveillance system further comprises a code for providing coded access to the remote coded access service device, and means for down-loading said information from the coded access service device.

In one embodiment, information related to captured video and/or audio is encrypted internally within the outdoor surveillance camera unit and stored therein.

According to an embodiment, the surveillance camera is coupled to an encryption unit arranged to encrypt the video signals, including image and sound, recorded and provide encrypted surveillance information via the first communication interface. The encryption unit may be provided as a separate unit to the video camera.

According to an embodiment the external tamper-proof power supply unit is arranged inside a building comprising parts of the surveillance system.

According to an embodiment, the external tamper-proof power supply unit is arranged outside a building comprising parts of the surveillance system.

An advantage of certain embodiments described herein is that information related to captured video and/or audio is encrypted already internally within the surveillance camera unit. In this way, not even the owner of the video surveillance system can use the captured and recorded video material freely, which is in line with many present jurisdictions as in Sweden, for instance. This solves the problem with providing a complete solution to the problem of providing a secure outdoor environment without influencing the personal integrity.

Another advantage of the inventive video surveillance system is that the captured and recorded video being always encrypted cannot be be tampered with, and therefore be relied upon as credible evidence.

In another embodiment, the encrypted captured and recorded video material can be transmitted in real time and/or from stored files by wireless transmission to authorities or to an off surveillance camera unit storage site. Preferably the transmission link is a satellite up-link down link system.

The first is an advantage in case there is an immediate need for real-time video and possibly sound, for instance in case of serious crime taking place. The authorities may then request wireless real time transmission and in real-time control resources.

Further advantages and features of embodiments of the present invention will become apparent when reading the following detailed description in conjunction with the drawings.

### BRIEF DESCRIPTION OF THE DRAWINGS

Fig. 1 is a schematic block diagram of a video surveillance system in which some embodiments of this disclosure are implemented, wherein power supply is inside a company network, typically a physical unit such as a building, arranged to provide power via the first communication interface, via a communication link, for instance by means of Power over Ethernet (POE);
Fig. 2 is a schematic block diagram of a video surveillance system in which some embodiments of this disclosure are implemented, wherein power supply is provided outside the company network (building);
FIG. 3 is a schematic block diagram of a video surveillance system in which some embodiments of this disclosure are implemented, wherein power supply is outside the company network (building) and communication is provided via mobile network, and
FIG. 4 is a detailed schematic block diagram of a surveillance camera unit according to one embodiment of this disclosure.

### DETAILED DESCRIPTION

The present invention will now be described more fully hereinafter with reference to the accompanying drawings, in which different exemplary embodiments are shown. These exemplary embodiments are provided so that this disclosure will be thorough and complete and not for purposes of limitation.

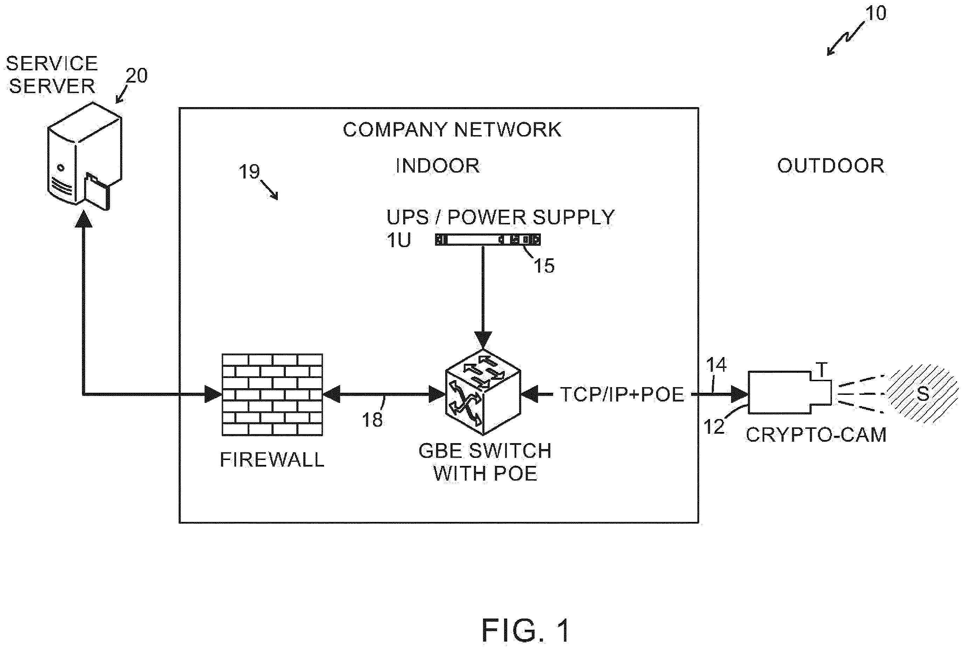

Fig. 1 illustrates an example of a video surveillance system in which some embodiments of this disclosure may be implemented.

As illustrated in FIG. 1, the surveillance system 10 comprises at least one surveillance camera unit 12, herein a video camera having encryption as schematically illustrated by the wording "CRYPTO CAM", in the drawings, but is not limited to only one. The surveillance camera unit 12 according to this embodiment comprises an outdoor video camera provided for outdoor use (schematically illustrated by the wording "OUTDOOR") and provided for capturing and recording at least video signals, but possibly also audio and covering an area of surveillance S. The surveillance camera unit 12 is mounted, for instance on a façade of a building, for surveillance of the area of surveillance S and can be of any suitable conventional type, such as a CCD- camera. The visible part of the camera can be of cupola-type having built-in IR-illumination for improved image-quality or of so-called "pin-hole" type for hidden mounting inside a facade of a building or the like. Typically, it is not possible to see if the camera of the surveillance camera unit is encrypted or not, since the camera itself may by any conventional suitable camera.

Video and sound is encrypted directly in the surveillance camera unit 12 to hinder unauthorized persons to access the information related to the captured and recorded video and possibly sound by the surveillance camera unit 12. The encryption is provided all the way to an authorized end-user via a secure (secure against tampering or accessing by unauthorized persons) remote coded access device 20 such as a communication central operated by the police or the like and such that that the personal integrity can always be preserved.

Herein, the term "surveillance camera unit 12", means that the camera and the encryption circuitry of the camera unit 12 may be physically separated entities, but still being considered as one surveillance camera unit 12. The encryption circuitry may be provided for instance in an intelligent emergency sign, as disclosed below. Then a cable between the camera and the encryption circuitry has to be protected against tampering. If the cable is tampered with, no information will be transmitted.

In one embodiment, as illustrated in FIG. 1, information related to captured video and/or audio is encrypted internally within the outdoor surveillance camera unit 12 (This is illustrated by the label "CRYPTO-CAM" in FIG. 1).for further transmission to a secure remote coded access device 20, herein service server (This is illustrated by the by the wording "SERVICE SERVER"). The term "remote" means remote from the surveillance camera.

In this embodiment, the outdoor surveillance camera unit 12 is mounted outdoors to a building (schematically illustrated by the wording "INDOOR" indicating indoors in relation to the building and "OUTDOOR" indicating outdoors in relation to the building) and is pointed in a forward direction as seen in FIG. 1. The surveillance camera unit 12 may alternatively be hidden. The video camera of the surveillance camera unit 12 is typically provided with a wide angle, infra-red lens, with a motorized iris to increase the operating light range of the video camera. The video camera employed typically has a minimum resolution of, for example, 300 times 200 pixels, has infra-red capabilities and preferably runs up to 30 frames per second. The video camera preferably employs CCD such that night vision by infrared optics is improved. The surveillance camera unit 12 may also advantageously include a microphone (not shown) for capturing, and possibly recording sound from an area of interest. The area of interest for recording sound might be the area of surveillance S, but can also be another area of interest, for instance a larger area, or a smaller area. To be able to combine video, but also sound is a great advantage since sound may be used for recognizing for instance a dialect spoken, or when combined with a time stamp, when an explosion took place, and in what direction for instance.

The surveillance camera unit 12 has a first communication interface 14 for communication via a communication network, or link, with the remote coded access service device 20 for securely storing information related to the video and possibly audio signals and having a coded access.

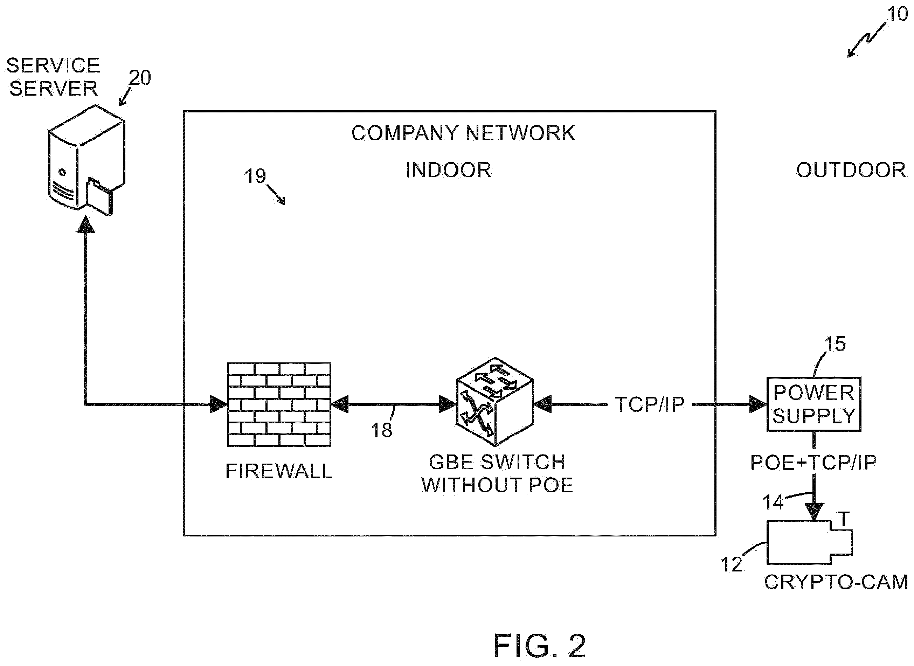

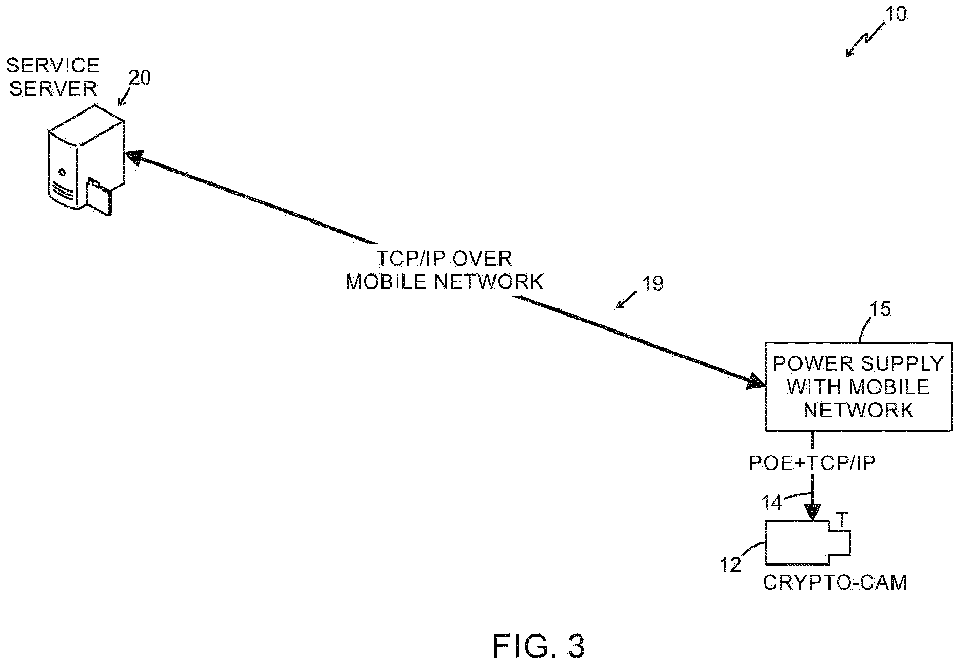

Typically, the encrypted surveillance camera unit 12 sets up an encrypted communication link 18 to the remote coded access service device 20 already when the surveillance camera unit 12 is connected to a network 19 related to the system 10, which network 19 can be a company network, LAN, (FIG: 1 and FIG. 2) or a wireless network, such as a mobile network (FIG. 3), or a combination thereof.

In this way, already present infrastructure such as the company network 19 including firewalls, switches (GBE switch) etc. can be employed. This is environmentally important since no new, separate video surveillance systems and transmission infrastructure has to be installed. The system 10 may also use and be combined with other present infrastructure and structures for network handling, power supply, maintenance and access systems such as door locks (as disclosed in the Swedish patent SE-C2-537 077 for instance), emergency signs (provided they are intelligent as disclosed in Swedish patent SE-C2-536 311 for instance), company alarm systems etc. Since the system 10 can be combined with present infrastructure, the invention provides practical and economic advantages. But, important is that the surveillance information provided via the first communication interface 14 is encrypted already in the surveillance camera unit 12 (which may in some embodiments be separated into multiple entities as disclosed above) and remains encrypted in the remote coded access service device 20.

The information transmitted can include one or more of the following: status, at what time transmission of the captured video and sound to the remote coded access service device 20 shall occur, typically during low data traffic time such as during night.

An external tamper-proof power supply unit 15, typically provided indoors (FIG. 1), is arranged to supply power and provide back-up power supply to the outdoor surveillance camera unit 12. The tamper-proof power supply unit 15 can be combined with network connection means using conventional communication protocols such as TCP/IP, or alternatively, or in combination with a cellular network connection, power supply and back-up power in case of power failure. Power can also be supplied via the network using TCP/IP for instance by means of POE (Power Over Ethernet) as illustrated in FIG. 1. A video monitor (not shown) can be connected to the surveillance unit camera 12 by means of a video online link, for instance provided by means of the communication link 18, to display the scene or incident currently being photographed by the video camera 12 through a monitor and/or transmit the image to an off building site through a mobile network. The latter is illustrated in FIG. 3. Alternatively, the tamper-proof power supply unit 15 can be mounted outdoors in a separate locked and tamper-proof enclosure. This is schematically illustrated in FIG. 2.

The service centre 20 comprises a service centre, such as a computer server, for instance a Video Management System Server (VMS-server), in which computer programs such as scripts can be implemented by a person skilled in the art of programming.

Typically, the service centre 20 receives encrypted images and possibly sounds provided by, or sent from, the surveillance camera unit 12, via the first interface 14.

The video surveillance system 10 further comprises a code (not illustrated) for providing coded access to the remote coded access service device 20, and means for down-loading (not illustrated) the information from the coded access device 20. The coded access device 20, herein the service centre, is the only place where decryption can be performed and under certain well defined circumstances, and for limited zones, corresponding to areas of surveillance S only, which is required for the personal integrity to be preserved complying also with jurisdictions.in strict countries in this regards. This is a considerable advantage compared to prior art outdoor video surveillance cameras and probably the only reason to get allowance for an outdoor video camera of a surveillance system.

The code can be a code for providing coded access by an authorized user such as police and military operators, to one or more zones S. The means for down-loading the encrypted information can be an authorization code permitting access and circuitry therefore.

Authorized users such as police and military having a particular soft-ware installed can then request connection from a so-called communication central, wherein typically each city or the like is divided into zones. An advantage of having zones is to limit the amount of information being available to an operator (of the service centre 20) at the same time. Certain users, for instance operators, have access to a number of zones, whereas certain users have limited access only.

One reason to using zones is to delimit the amount of information presented on a screen to the operators of the communication central. If, as an example, an alarm, or information about an incident, is transmitted by phone, or by an automatic alarm, from a place within a particular zone, say" zone 27", an operator of the communication central, which communication central for the sake of simplicity may correspond to the service center 20, will decide if the system 10 should be used (i. e. to access surveillance information) or not.

To be able to "open", i. e. to request connection to the camera unit 12 to receive real-time information or to access recorded video related to zone 27, typically two operators within the communication central 20 have to enter their own personal code to the soft-ware running the application for coded access. The entering of the personal codes is stored in an event memory including the reason to why the zone 27 should be opened. How zone 27 has been opened this is indicated on the screen of the communication central in some way, for instance by a coloured pin having a first colour. When zone 27 is open all encrypted out door cameras 12 are shown in this first colour and if the also have sound this is illustrated in a second colour. In door cameras are represented by a third colour. One reason to be able to see also indoor cameras is that it is possible to follow a crime also indoors, for instance if the crime continues indoors. If the operator considers that the situation requires more zones, a new zone, for instance zone 26 can be opened in the same way. The number of zones that can be opened is typically limited only by the size of the screen of the communication center.

Also, check of recorded material can be performed in a corresponding way as described above in relation to zones.

The first interface 14 can also be configured to receive control commands and other data input. In this way, there is provided a video surveillance system that could instantaneously broadcast live activity to authorities in order that a response to a crime could be dispatched to the scene in order to determine and/or prevent the crime.

Another advantage of some of the embodiments presented herein is that they are simple to implement for a person skilled in the art of programming by simple scripts for the VMS-server.

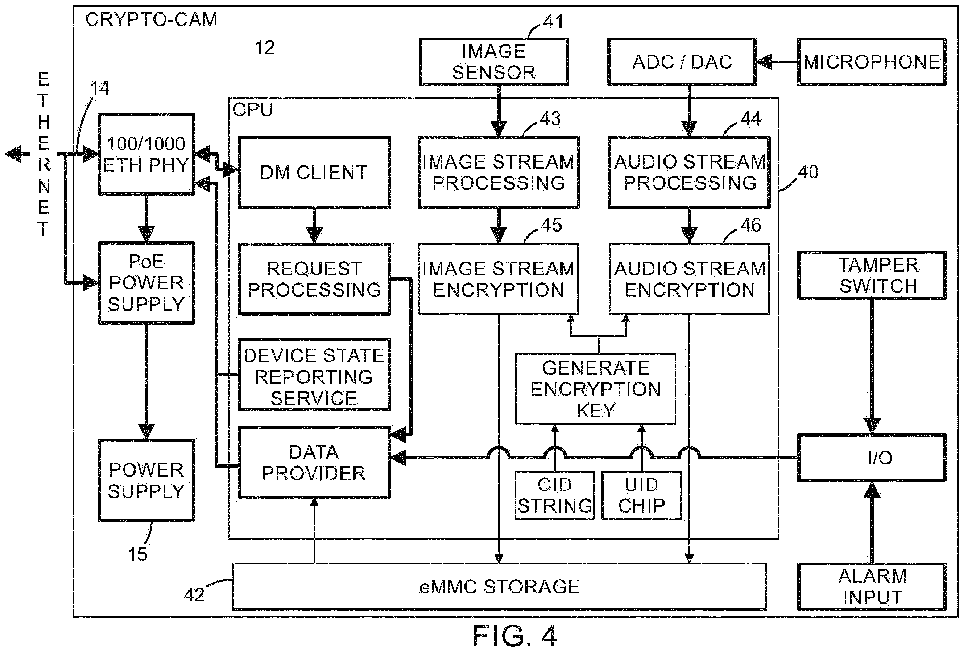

Now is referred to FIG. 4 schematically illustrating a block-schematic of a camera unit 12 according to an exemplary embodiment.

The camera unit 12 may include one or more crypto-authenticating chip(s).
Crypto-authenticating chips are well known and can be implemented by means of a processor CPU 40. They are designed to receive as input a first data string and, in response, output a second data string. When both data strings are processed together with a secret key, the result will show the second data string to have been produced by the crypto-authenticating chip or not. The second string cannot be inexpensively determined from knowing the first string without having the key.

The secret key for each crypto-authenticating chip is securely supplied to a single entity that cooperates with network operators, which entity operates a secure database and comparison service to perform the authentication for the network operators.

The video signals generated by the image sensor 41 of the video camera 12 are converted to digital format and synchronized, as explained below, and stored on eMMC storage 42 or a hard drive.

The hard disk storage is preferred for large capacity. Any configured hard disk device can be used for example, a Seagate UDMA 8.6 GB hard drive. Additionally tape drive storage can be used either as primary or backup. The storage medium can be analog or digital. For example, an endless tape loop or other storage medium could be used. Video storage can be VCR type with endless loop characteristics, re-writeable CD ROM, computer hard drive with computer compression of video. This allows upgrading as new storage media types are produced.

According to one embodiment, the storage 42 which has the capacity to store the information for 48 hours or more, records the digitized, encrypted output of the video camera 12. The storage 42 can be controlled by a remote user to activate the storage play back recorded information, find referenced events, and decode the stored information and the like. This permits authorities remotely to be in full control of the storage 42 in the camera unit 12 so that they may view information off site and monitor current or any previously recorded incident. Preferably, a system controller prohibits recording over a previously recorded portion of the data, prior to the drive space being released to the system. In this manner a permanent, non-corrupted record is retained.

The analogue output of video camera 12 is fed to image stream 43 and audio stream 44 processing.

According to one embodiment, when there is a need for real-time streaming of video for instance to direct operating personnel, there is provided a camera 12 unit with electronic memory capable of storing received data. Data is transmitted and received by a transceiver through standard RF modulation and demodulation techniques such as FM (frequency modulation), AM (amplitude modulation), SSB (single side-band), FSK (frequency shift keying), PSK (phase shift keying), PCM (pulse code modulation), and the like. The transceiver is normally in a powered-down mode whereby the transceiver receives signals into memory to trigger events such a periodic down load to secure storage. Upon the reception of user specified data, the transceiver generates a signal as previously described to start the down load procedure. The transceiver can be switched between active and passive mode by reception of the appropriate code.

In the drawings and specification, there have been disclosed typical embodiments and, although specific terms are employed, they are used in a generic and descriptive sense only and not for purposes of limitation, the scope of the invention being set forth in the following claims.

## Claims

1. A video surveillance system (10), comprising
a surveillance camera unit (12) for capturing at least video signals and having a first communication interface (14) for communication with a remote coded access service device (20) for securely storing information related to said video signals and having a coded access,
**characterised in that** the surveillance information provided via the first communication interface (14) is encrypted in the outdoor surveillance camera unit (12) and **in that** an external tamper-proof power supply unit (15) is arranged to supply power and provide back-up power supply to the outdoor surveillance camera unit (12), wherein the encryption is provided all the way to an authorized end-user via the secure remote coded access device 20, wherein the video surveillance system (10) further comprises a code for providing coded access to the authorized end-user of said remote coded access service device (20), and means for down-loading said video signals from said coded access service device (20).

2. The video surveillance system (10) according to claim 1, wherein the surveillance camera unit (12) is coupled to an encryption unit (17) arranged to encrypt the surveillance information, including image and sound, recorded and provide the encrypted surveillance information via the first communication interface (14).

3. The video surveillance system (10) according to claim 1 or 2, wherein the external tamper-proof power supply unit (15) is arranged inside a building comprising parts of the surveillance system (10).

4. The video surveillance system (10) according to claim 1 or 2, wherein the external tamper-proof power supply unit (15) is arranged outside a building comprising parts of the surveillance system (10).

5. The video surveillance system (10) according to claim 3, wherein the external tamper-proof power supply unit (15) is arranged to provide information and power via the first communication interface (14), by means of Power over Ethernet (POE) or similar.

6. The video surveillance system (10) according to claim 3, wherein the surveillance camera unit (12) further comprises at least one audio unit in communication with said surveillance unit (12) for monitoring areas proximate the camera (12).
